# EUROPEAN PATENT SPECIFICATION

(11) **EP 0 546 413 B1**
(45) Date of publication and mention of the grant of the patent: **15.05.1996**
(21) Application number: 92120427.7
(22) Date of filing: 30.11.1992
(51) Int. Cl.: G01C 19/72

(54) **Fiber optic gyro**
Optischer Faserkreisel
Gyroscope à fibre optique

(30) Priority: 03.12.1991 JP 319115/91
(43) Date of publication of application: 16.06.1993
(73) Proprietor: JAPAN AVIATION ELECTRONICS INDUSTRY, LIMITED, Shibuya-ku Tokyo (JP)
(72) Inventor: Ohno, Aritaka, c/o Japan Aviation Elec.Ind.Ltd., Shibuya-ku, Tokyo (JP); Motohara, Shinji, c/o Japan Aviation Elec.Ind.Ltd., Shibuya-ku, Tokyo (JP)
(74) Representative: Hoffmann, Eckart, Dipl.-Ing.

(56) References cited:
- EP-A- 0 534 435
- WO-A-92/11509
- WO-A-93/04340
- PATENT ABSTRACTS OF JAPAN vol. 12, no. 202 (C-503) 10 June 1988 & JP-A-63 004 843 (OMRON TATEISI ELECTRONICS CO) 9 January 1988.
- JOURNAL OF LIGHTWAVE TECHNOLOGY vol. LT-2, no. 2, April 1984, NEW YORK US pages 91 - 107 BERGH ET AL. 'An Overview of Fiber-Optic Gyroscopes.
- ELECTRONICS LETTERS. vol. 16, no. 25, December 1980, STEVENAGE GB pages 941 - 942 HOTATE ET AL. 'Rotation Detection by Optical Fibre Laser Gyro with Easily Introduced Phase-difference Bias.
- MEASUREMENT SCIENCE AND TECHNOLOGY vol. 1, no. 10, October 1990, BRISTOL GB pages 1078 - 1083 , XP162639 ONO ET AL. 'A small-sized, compact, open-loop fibre-optic gyroscope with stabilised scale factor.

## Description

### BACKGROUND OF THE INVENTION

The present invention relates to a fiber optic gyro in which clockwise and counterclockwise light beams are caused to propagate through an optical fiber coil and their phase difference is detected to thereby detect an angular rate applied to the optical fiber coil about the axis thereof.

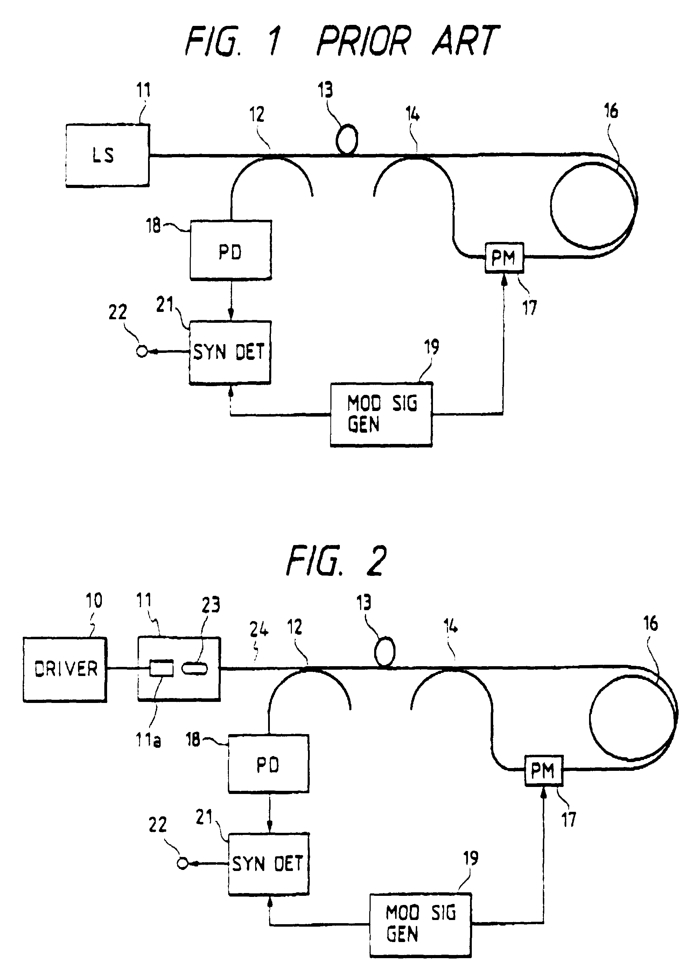

Fig. 1 shows a conventional fiber optic gyro. Light from a light source 11 passes through an optical fiber coupler or similar optical coupler 12 and enters into a polarizer 13, wherein its component in a predetermined direction of polarization alone is extracted. The light from the polarizer 13 is split by an optical fiber coupler or similar optical coupler 14 into two, one of which is provided as a clockwise beam to one and of an optical fiber coil 16 and the other of which is provided as a counterclockwise beam to the other end of the optical fiber coil 16 via an optical phase modulator 17.

The clockwise and counterclockwise beams, after having propagated through the optical fiber coil 16, return to the optical coupler 14, wherein they are combined to interfere with each other. The resulting interference light is provided to the polarizer 13, wherein its component only in a predetermined direction of polarization is extracted. The light having thus passed through the polarizer 13 is branched by the optical coupler 12 into a photodetector 18 for conversion into an electric signal corresponding to the intensity of the light. A periodic function from a modulation signal generator 19, for example, a sine-wave signal, is applied to the optical phase modulator 17 to drive it to modulate the phase of the light passing therethrough. The output of the photodetector 18 is provided to a synchronous detector 21, wherein it is synchronously detected by a reference signal from the modulation signal generator 19, and the detected output is provided to an output terminal 22.

With no angular rate applied to the optical fiber coil 16 about its axis, no phase difference exists between the clockwise and counterclockwise light beams having propagated through the optical fiber coil 16 and the output of the synchronous detector 21 is also zero. When an angular rate is being applied to the optical fiber coil 16 about its axis, the phase difference corresponding to the angular rate is introduced between the clockwise and counterclockwise light beams and the synchronous detector 21 yields an output of a polarity and a level corresponding to the direction and magnitude off the applied angular rate, permitting the detection of the applied angular rate.

The fiber optic gyro suffers an output drift owing to optical error inducing factors such as scattering, variation in polarization and the Kerr effect in the optical fiber coil 16. It is described in, for example, IEEE, Vol. LT-2(2), 1988, pp 91-107, that it is effective in suppressing the influence of the above-mentioned factors to use a light source which emits light of low coherence.

It is customary in the prior art to employ a super luminescent diode (SLD) or an end face light emitting diode (ELED) as such a low-coherence light source. In general, however, since these diodes need large operating currents, their use makes it difficult to implement a less power-consuming fiber optic gyro. In addition, these light sources are costly, and hence inevitably raise the manufacturing costs of the fiber optic gyro.

The document WO-A-93/04340 (prior art according to Art. 54(3) EPC) discloses a fiber optic gyro in which light from a light source is split by optical coupling means into two light beams and the two light beams are provided as clockwise and counterclockwise light beams to both ends of an optical fiber coil. The clockwise and counterclockwise light beams, after having propagated through said optical fiber coil, are caused by the optical coupling means to interfere with each other, and the intensity of the interference light is converted by a photodetector to an electric signal. An angular rate applied to the optical fiber coil about its axis is detected from the electric signal. The light source used in this prior art is a CD-laser diode. A fiber optic gyro of the same kind is also disclosed in EP-A-0 534 435 (prior art according to Art. 54(3) EPC). While the prior art of WO-A-93/04340 is characteristic in operating the CD-laser diode below its threshold-current range, the prior art of EP-A-0 534 435 is characteristic in employing for the optical fiber coil an optical fiber of a long wavelength region, longer than the wavelength region of the light emitted by the light source.

The document WO-A-92/11509 (prior art according to Art. 54(3) EPC) discloses a fiber optic gyro of the same general type as those of the two documents mentioned above. In this prior art a low cost laser diode is used as the light source and for the fiber coil a fiber is used which is single-moded at 1.3 µm but may be moderately multi-moded at the wavelength of 0.8 µm of the light source.

### SUMMARY OF THE INVENTION

It is therefore an object of the present invention to provide a fiber optic gyro which is less power-consuming and less expensive than the conventional fiber optic gyro.

This object is achieved with a fiber optic gyro as claimed in claim 1. Specific embodiments of the invention are subject-matter of the dependent claims.

### BRIEF DESCRIPTION OF THE DRAWINGS

Fig. 1 is a block diagram showing a conventional fiber optic gyro;
Fig. 2 is a block diagram illustrating an embodiment of the present invention;
Fig. 3A is a graph showing the optical output-drive current characteristic of a self-excited oscillation laser;
Fig. 3B is a graph showing, by way of example, the relationship between the quantity of light emitted from an optical fiber and the drive current when light emitted from the self-excited oscillation laser was applied via grin lens to a single-mode optical fiber;
Fig. 4A is a graph showing the coherence characteristic of the output light from the self-excited oscillation laser when it was driven by a current lower than a threshold value current by 2 mA;
Fig. 4B is a graph showing the coherence characteristic of the output light from the self-excited oscillation laser when it wag driven by a current of a value close to the threshold value;
Fig. 4C is a graph showing the coherence characteristic of the output light from the self-excited oscillation laser when it was driven by a current higher than the threshold current;
Fig. 4D is a graph showing the coherence characteristic of the output light from a super luminescent diode; and
Fig. 5 is a block diagram illustrating another embodiment of the present invention.

### DESCRIPTION OF THE PREFERRED EMBODIMENTS

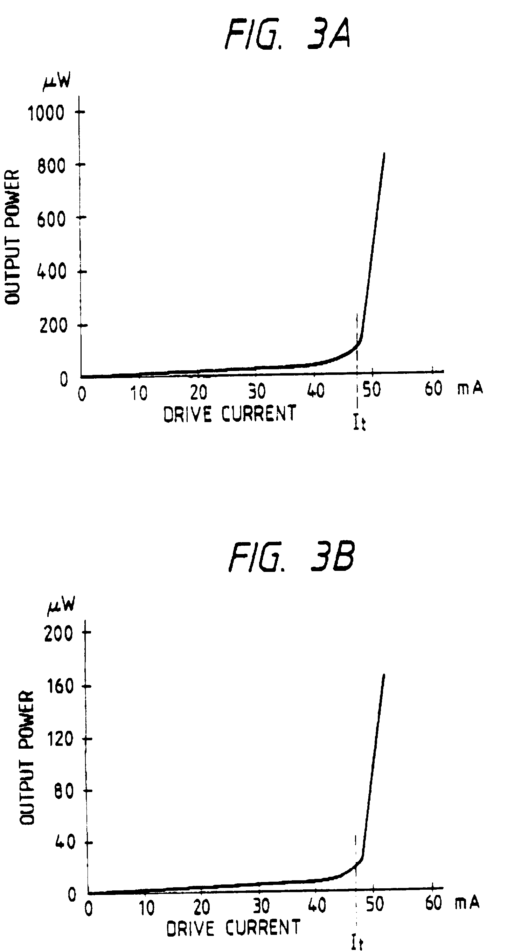

Fig. 2 illustrates in block form an embodiment of the present invention, in which the parts corresponding to those in Fig. 1 are identified by the same reference numerals. The present invention employs a self-excited oscillation multi-mode laser 11a as the light source 11, to which a drive current smaller than a laser oscillation threshold current is applied from the driver 10. Fig. 3A shows the current-optical output characteristic of the self-excited oscillation multi-mode laser 11a, from which it is seen that when the drive current exceeds a threshold current Iₜ, the power of the output light abruptly increases and that even when the drive current is smaller than the threshold current Iₜ, the laser emits light although the output power is small.

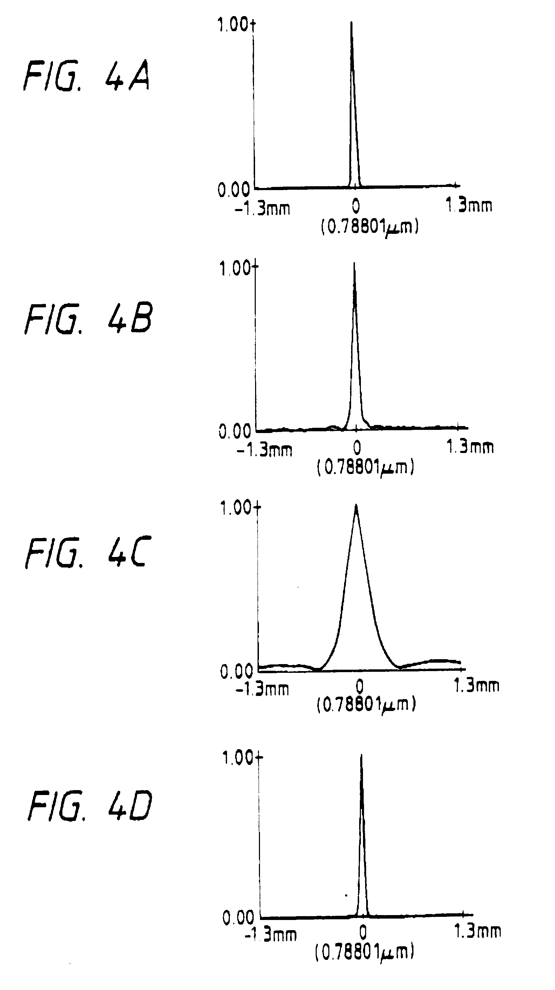

When the self-excited oscillation laser 11a is in the laser-oscillation state, no low-coherence property is obtainable, but when it is driven by a current below the laser oscillation threshold current Iₜ, its output light is mostly natural light, and consequently, the emitted light has low coherence substantially equal to that of output light from the SLD or ELED. Figs. 4A through 4D show the coherent properties of the output light from the self-excited oscillation multi-mode laser 11a. Figs. 4A, 4B and 4C show the coherent properties obtained in the cases of when the drive current being a current lower than the laser oscillation threshold current Iₜ by 2 mA, a current clone to the threshold current Iₜ and a current above the threshold current Iₜ, respectively. In Figs. 4A to 4D the abscissa represents the optical path difference between clockwise and counterclockwise light beams when they interfere with each other, and the ordinate represents the visibility of interference fringes. In Fig. 4A the visibility of interference fringes forms a sharp peak in the Vicinity of zero optical path difference and as the path difference increases, the visibility of interference fringes becomes substantially zero -- this indicates that the output light has no coherence in this case. In Fig. 4B the half-width of the peal in the vicinity of zero optical path difference is a little larger than in the case of Fig. 4A and the visibility of interference fringes slightly appears as the optical path difference increases. In Fig. 4C the half-width of the peak in the vicinity of zero optical path difference is relatively large and interference fringes remain even when the optical path difference increases -- this reveals that the output light is coherent.

Incidentally, the coherence characteristic of the SLD is such as shown in Fig. 4D, which is substantially identical with the coherence characteristic depicted in Fig. 4A. From this it is understood that light which is emitted from the self-excited oscillation laser 11a by driving it with a current lower 1 mA or more below the threshold current Iₜ shows about the same low-coherence characteristic as does the SLD or the like which is used as the light source in conventional fiber optic gyros. Since the coherent characteristic readily varies when the drive current is close to the threshold value Iₜ, it is necessary, for obtaining a sufficiently low-coherence characteristic at all times, to drive the laser by a current 1 mA or more below the threshold value Iₜ' Assuming, for example, that the oscillation threshold current of the self-excited oscillation laser 11a is 50 mA, the driver 10 supplies, as the drive current, a fixed current of 49 mA or below to the laser 11a.

When the laser 11a is driven by such a current below the threshold current Iₜ' the quantity of light emitted from the laser 11a is small as shown in Fig. 3A. It is preferable, therefore, that a grin lens 23, which provides a high optical coupling efficiency, be provided between the laser 11a and an optical fiber or similar optical waveguide 24 which is connected to the optical coupler 12 as shown in Fig. 2. Fig. 3B shows the quantity of light emitted from a single-mode optical fiber when the output light from the self-excited oscillation laser 11a was supplied via the grin lens 23 to the optical fiber. As can be seen from Fig. 3B, even if the drive current is 2 mA below the threshold current Iₜ, the light emitted from the optical fiber has a power of 10 µW or more -- this is sufficient for use as the light source for fiber optic gyros of low and medium accuracy.

A self-excited oscillation laser for compact disks usually emits light at a wavelength of 0.79 µm or so. Hence, when this laser is employed as the light source 11, it is preferable to use, as the optical fiber coil 16, a 0.79 µm band, polarization preserving optical fiber, a 0.79 µm band single mode optical fiber with a de-polarizer connected to one end thereof, or an optical fiber coil with 0.79 µm band polarization preserving optical fibers connected to both ends thereof to prevent interference of polarized components perpendicular or orthogonal to each other.

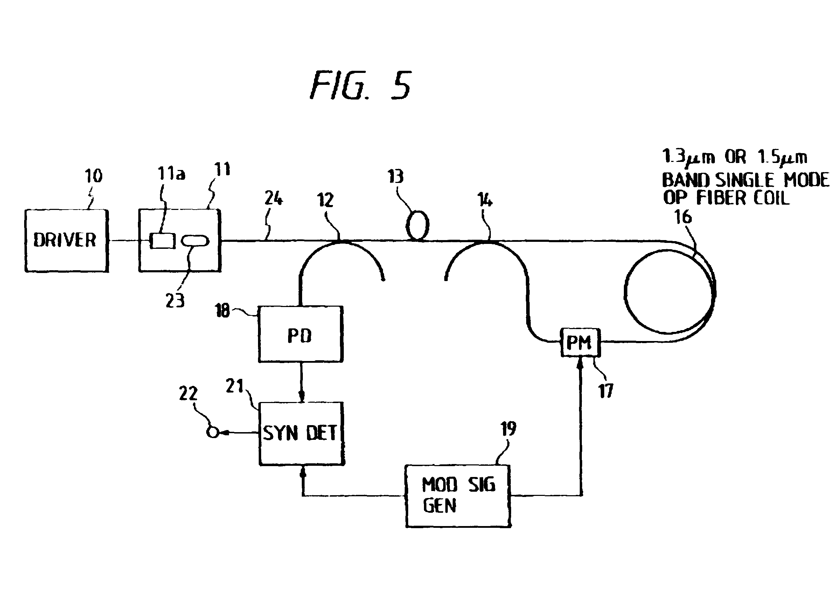

Yet, in the case of using ouch a commercially available self-excited oscillation laser which emits light at a wavelength of around 0.79 µm, it is also possible to utilize, as the optical fiber coil 16, a 1.3 or 1.5 µm band single mode optical fiber as depicted in Fig. 5. Since this single mode optical fiber has a core diameter about twice larger than that of the 0.79 µm band single band optical fiber, the use of this optical fiber decreases a change in the quantity of light emitted from the optical fiber which is caused by misalignment in its coupling with the optical coupler 14, and consequently, light from the optical coupler 14 can readily be introduced into the optical fiber coil 16. The 1.3 or 1.5 µm band single mode optical fiber propagates light of a 0.79 µm wavelength in a multi-mode, but in this instance, the multi-mode is up to about the secondary mode. When the optical fiber coil 16 is properly bent with a diameter of, say, 20 mm or so, its effective refractive index changes and the cutoff frequency lowers accordingly, with the result that the optical fiber coil 16 propagates the light in its fundamental mode, that is, operates essentially as a single mode optical fiber. In Fig. 2 it is preferable to connect a de-polarizer to one end of the optical fiber coil 16 or polarization preserving optical fibers to both ends of the coil 16 so that the polarized components orthogonal to each other are displaced apart in phase to such an extent as not to interfere with each other.

The optical couplers 12 and 14 may also be formed by optical IC's as well as optical fibers. The present invention is also applicable to a closed loop type fiber optic gyro.

As described above, according to the present invention, the self-excited oscillation multi-mode laser is used as the light source, and since this laser is used as a light source for compact disks and inexpensive, the fiber optic gyro can be fabricated at low cost. Moreover, the power consumption of this fiber optic gyro is low because the operating current of the laser is small.

Furthermore, the use of a single mode optical fiber of a long wavelength band such as a 1.3 or 1.5 µm band permits easy optical coupling and affords reduction of coupling loss. In addition, these long wavelength band single mode optical fibers are mass-produced for communication use and are readily available at low cost. Hence, the fiber optic gyro can be fabricated at low cost.

It will be apparent that many modifications and variations may be effected without departing from the scope of the novel concepts of the present invention.

## Claims

1. A fiber optic gyro in which light from a light source 111a) is split by optical coupling means (14) into two light beams, said light beams being provided as clockwise and counterclockwise light beams to both ends of an optical fiber coil (16), said clockwise and counterclockwise light beams, after having propagated through said optical fiber coil, are caused by said optical coupling means to interfere with each other, the intensity of said interference light is converted by a photodetector (18) into an electric signal, and an angular rate applied to said optical fiber coil about its axis is detected from said electric signal, wherein said light source (11a) is a self-excited oscillation multi-mode laser, drive means (10) are provided for driving said laser by a current below a laser oscillation threshold value so as to emit light at a value smaller than said laser oscillation threshold value, and wherein said optical fiber coil is a single-mode optical fiber coil of a wavelength band longer than the wavelength of the light from said light source (11a).

2. The fiber optic gyro of claim 1, wherein said self-excited oscillation multi-mode laser (11a) emits light at a wavelength of about 0.79 µm and said optical fiber coil (16) is formed by a 1.3 or 1.5 µm band single mode optical fiber.

3. The fiber optic gyro of claim 1, wherein a grin lens (23) is provided to optically couple the output light of said self-excited oscillation multi-mode laser (11a) to the input of said optical coupling means (14).

## Patentansprüche

1. Faseroptisches Gyroskop, bei dem Licht von einer Lichtquelle (11a) von einer optischen Kopplungseinrichtung (14) in zwei Lichtstrahlen aufgeteilt wird, die Lichtstrahlen als Uhrzeigersinn- und Gegenuhrzeigersinn-Lichtstrahlen den beiden Enden einer Lichtwellenleiterspule (16) zugeführt werden, der Uhrzeigersinn- und der Gegenuhrzeigersinn-Lichtstrahl nach Durchlaufen der Lichtwellenleiterspule von der optischen Kopplungseinrichtung zur Interferenz miteinander gebracht werden, die Intensität des Interferenzlichts von einem Photodetektor (18) in ein elektrisches Signal umgesetzt wird und eine an die Lichtwellenleiterspule um deren Achse angelegte Winkelgeschwindigkeit anhand des elektrischen Signals erfaßt wird, wobei die Lichtquelle (11a) ein selbsterregter Schwingungs-Multimoden-Laser ist, Treibermittel (10) zur Ansteuerung des Lasers mit einem Strom unterhalb eines Laserschwingungsschwellenwerts vorgesehen sind, damit Licht bei einem Wert kleiner als dem Laserschwingungsschwellenwert emittiert wird, und wobei die Lichtwellenleiterspule eine Einmoden-Lichtwellenleiterspule eines Wellenlängenbandes länger als die Wellenlänge des Lichts von der Lichtquelle (11a) ist.

2. Faseroptisches Gyroskop nach Anspruch 1, bei dem der selbsterregte Schwingungs-Multimoden-Laser (11a) Licht bei einer Wellenlänge von etwa 0,79 µm emittiert und die Lichtwellenleiterspule (16) von einem Einmoden-Lichtwellenleiter des 1,3 oder 1,5 µm Bandes gebildet wird.

3. Faseroptisches Gyroskop nach Anspruch 1, bei dem eine Grinlinse (23) vorgesehen ist, um das Ausgangslicht des selbsterregten Schwingungs-Multimoden-Lasers 11a optisch auf den Eingang der optischen Kopplungseinrichtung (14) zu koppeln.

## Revendications

1. Gyromètre à fibre optique dans lequel de la lumière provenant d'une source de lumière (11a) est divisée par un moyen de couplage optique (14) en deux faisceaux de lumière, lesdits faisceaux de lumière étant délivrés, comme faisceaux de lumière dans le sens des aiguilles d'une montre et dans le sens contraire des aiguilles d'une montre, aux deux extrémités d'une bobine de fibre optique (16), lesdits faisceaux de lumière dans le sens des aiguilles d'une montre et dans le sens contraire des aiguilles d'une montre, après s'être propagés dans ladite bobine de fibre optique, sont amenés à interférer l'un avec l'autre par ledit moyen de couplage optique, l'intensité de ladite lumière d'interférence étant convertie par un photodétecteur (18) en un signal électrique, et une vitesse angulaire appliquée à ladite bobine de fibre optique autour de son axe étant détectée à partir dudit signal électrique ; dans lequel ladite source de lumière (11a) est un laser multimode à oscillation auto-excitée ; dans lequel des moyens d'attaque (10) sont prévus pour attaquer ledit laser à l'aide d'un courant au-dessous d'une valeur de seuil d'oscillation de laser, de façon à émettre de la lumière à une valeur plus petite que ladite valeur de seuil d'oscillation de laser ; et dans lequel ladite bobine de fibre optique est une bobine de fibre optique monomode d'une gamme de longueurs d'onde plus longue que la longueur d'onde de la lumière provenant de ladite source de lumière (11a).

2. Gyromètre à fibre optique selon la revendication 1, dans lequel ledit laser multimode à oscillation auto-excitée (11a) émet de la lumière à une longueur d'onde d'environ 0,79 µm ; et dans lequel ladite bobine de fibre optique (16) est formée par une fibre optique monomode dans la gamme de 1,3 ou 1,5 µm.

3. Gyromètre à fibre optique selon la revendication 1, dans lequel une lentille déformante (grin lens) (23) est prévue pour coupler optiquement la lumière de sortie dudit laser multimode à oscillation auto-excitée (11a) à l'entrée dudit moyen de couplage optique (14).
